Europäisches Patentamt

European Patent Office

Office européen des brevets

(19)

(11) Numéro de publication: **0 059 657**
**B1**

(12) **FASCICULE DE BREVET EUROPEEN**

(45) Date de publication du fascicule du brevet: **08.05.85**

(51) Int. Cl.⁴: **B 62 D 5/08**

(21) Numéro de dépôt: **82400263.8**

(22) Date de dépôt: **15.02.82**

(54) **Valve de servodirection à montage simplifié.**

(30) Priorité: **23.02.81 FR 8103518**

(43) Date de publication de la demande:
**08.09.82 Bulletin 82/36**

(45) Mention de la délivrance du brevet:
**08.05.85 Bulletin 85/19**

(84) Etats contractants désignés:
**DE GB**

(56) Documents cités:
**FR-A-2 403 476**
**FR-A-2 421 020**
**US-A-3 404 704**

(73) Titulaire: **SOCIETE ANONYME D.B.A.**
**Centre Paris Pleyel**
**F-93521 St-Denis Cédex 01 (FR)**

(72) Inventeur: **Schwanger, Hubert**
**46 avenue de Savigny**
**F-93600 Aulnay sous Bois (FR)**
Inventeur: **Sansone, Serge**
**5 rue du Goulet**
**F-93300 Aubervilliers (FR)**

(74) Mandataire: **Poidatz, Emmanuel et al**
**Service Brevets Bendix 44 rue François 1er**
**F-75008 Paris (FR)**

EP 0 059 657 B1

Courier.Press, Leamington Spa, England.

## Description

L'invention concerne un dispositif formant valve de servodirection à montage simplifié, et plus particulièrement un agencement particulier du système d'étanchéité axiale disposé entre l'en semble de distribution précité et le boîtier de valve, facilitant considérablement l'assemblage de ces deux parties.

De façon plus spécifique, l'invention a trait à un dispositif formant valve de servodirection, du type comprenant un élément de distributeur externe et un élément de distributeur interne coaxiaux, l'élément de distributeur interne étant monté tournant dans l'élément de distributeur externe et comprenant une partie faisant saillie axialement hors de l'élément de distributeur externe, l'élément de distributeur externe étant monté tournant dans un alésage d'un boîtier fixe, et un système d'étanchéité axiale comprenant un joint et un porte-joint engagé dans une portion d'extrémité de l'alésage du boîtier, de façon que le joint soit en contact avec la surface externe de la partie de l'élément de distributeur interne faisant saillie axialement hors de l'élément de distributeur externe.

Un tel dispositif est connu du document FR—A—24034761. Dans ce document, le porte-joint est constitué par un bouchon supportant en rotation l'élément d'arbre d'entrée prolongeant l'élément de distributeur interne supportant lui-même à rotation l'élément de distributeur externe.

La présente invention a pour objet de proposer un sous-ensemble de distribution de structure simple et suffisamment cohérent pour qu'on puisse l'insérer sans difficulté dans l'alésage du boîtier et le positionner et l'immobiliser en place également sans difficulté dans l'alésage du boîtier avantageusement formé d'une seule pièce avec un carter de crémaillère de direction.

Pour ce faire, selon l'invention, le porte-joint comporte une partie de rondelle, s'étendant dans un plan perpendiculaire à l'axe commun des éléments de distributeur et portant ledit joint, et une partie tubulaire cylindrique rigide coaxiale aux éléments de distributeur, insérée dans ladite portion, de diamètre correspondant, de l'alésage du boîtier et fixée à la cage extérieure d'un roulement dont la cage intérieure est montée à la surface externe dudit élément de distributeur externe.

Selon une caractéristique plus particulière de l'invention, l'une des faces axiales de la cage extérieure du roulement est en appui contre un épaulement interne de l'alésage pour constituer une butée de positionnement des éléments de distributeur par rapport au boîtier.

L'invention sera mieux comprise et d'autres avantages de celle-ci apparaîtront à la lumière de la description qui va suivre d'une valve de servodirection intégrée au carter de la crémaillère de direction d'un véhicule automobile, conforme aux principes de l'invention et donnée en référence au deesin annexé dans lequel:

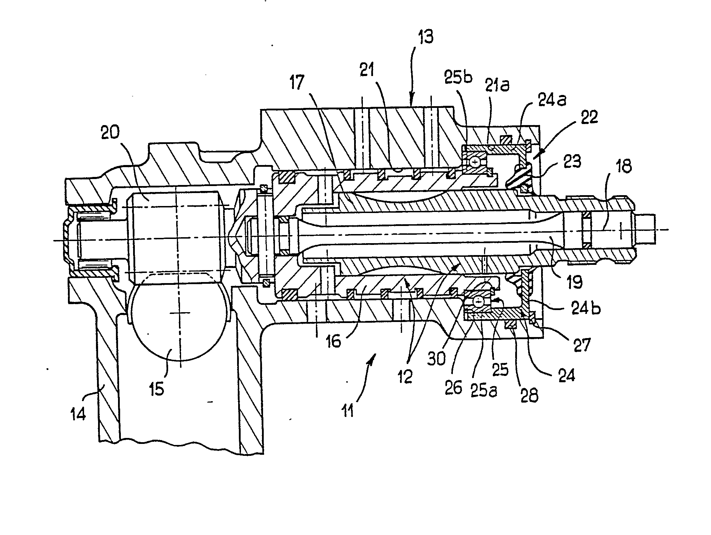

— La figure unique représente une vue schématique en coupe de ladite valve de servodirection.

Sur le dessin, un dispositif formant valve de servodirection 11 est constitué par un ensemble de distribution 12 inséré dans un boîtier 13 venu de matièrre avec la carter 14 d'une crémaillère 15 de direction d'une véhicule automobile. L'agencement de la valve est classique; l'ensemble de distribution 12 comporte principalement deux éléments de distributeur coaxiaux, un élément de distributeur externe 16 et un élément de distributeur interne 17. Ces deux éléments de distributeur sont montés tournant l'un par rapport à l'autre autour de leur axe commun 18 pour assurer une distribution de fluide vers les chambres d'un vérin d'assistance (non représenté). De façon bien connue, le débattement angulaire possible entre les éléments de distributeur 16 et 17 est limité à quelques degrés et une barre de torsion 19 est fixée entre les deux éléments de distributeur pour opposer un couple de rappel à tout décalage angulaire de ceux-ci, de part et d'autre d'une position neutre. L'élément de distributeur interne 17 est destiné à être relié à la colonne de direction du véhicule tandis que l'élément de distributeur externe se prolonge à l'intérieur du carter 14 par un pignon 20 engrenant avec la crémaillère 15. L'élément de distributeur 16 est lui-même monté tournant dans un alésage 21 du boîtier 13. D'autre part, un système d'étanchéité axiale 22 constitué d'un joint 23 et d'un porte-joint rigide 24 est fixé au boîtier 13 de façon que ledit joint 23 soit en contact avec la surface externe d'une partie de l'élément de distributeur interne 17 faisant saillie axialement par rapport à l'élément de distributeur externe 16.

Selon un agencement propre à l'invention, le porte-joint 24 comporte une partie tubulaire cylindrique 24a coaxiale aus éléments de distributeur 16 et 17 et insérée dans une portion 21a, de diamètre correspondant, de l'alésage 21. En outre, la partie tubulaire 24a est fixée à la cage extérieure 25a d'un roulement à billes 25 dont la cage intérieure 25b est montée à la surface externe de l'élément de distributeur 16. La cage intérieure 25b est immobilisée entre un épaulement de l'élément de distributeur 16 et un circlips 30 engagé dans une gorge annulaire pratiquée à la surface externe de ce même élément de distributeur. D'autre part, la face axiale la plus interne de la cage 25a constitue une butée de positionnement des éléments de distributeur par rapport au boîtier 13 puisqu'elle est en contact avec un épaulement interne 26 de l'alésage 21 dudit boîtier. Le porte-joint 24 est quant à lui immobilisé dans la portion 21a de cet alésage au moyen d'un circlips 27 engagé dans une gorge annulaire de ce même alésage. Le circlips 27 est en butée avec une extrémité de la partie cylindrique 24a du porte-joint. Celui-ci comporte en outre une partie en forme de rondelle 24b s'etendant dans un plan perpendiculaire à l'axe 18 et le joint 23 est surmoulé de part et d'autre de cette rondelle grâce à des trous pratiqués dans celle-ci. Enfin, un joint d'étanchéité 28 est inséré dans une gorge annulaire de la portion 21a de l'alésage 21. Ce joint coopère avec la surface externe de la partie cylindrique 24a du porte-joint.

Il apparaît clairement à la lumière de la description qui précède, que l'ensemble de distribution 12, le roulement 25 et le système d'étanchéité axiale 22 forment une unité facilement insérable dans le boîtier 13, le montage se résumant à l'introduction de cet unité dans ledit boîtier et à son immobilisation par la mise en place du circlips 27. Cette opération peut être facilement accomplie au stade du montage en série de l'ensemble du système de direction de l'automobile.

**Revendications**

1. Dispositif formant valve de servodirection, du type comportant un élément de distributeur externe (16) et un élément de distributeur interne (17) coaxiaux l'élément de distributeur interne (17) étant monté tournant dans l'élément de distributeur externe (16) et comprenant une partie faisant saillie axialement hors de l'élément de distributeur externe (16), l'élément de distributeur externe étant monté tournant dans un alésage (21) d'un boîtier fixe (13), et un système d'étanchéité axiale (22) comprenant un joint (23) et un porte-joint (24) engagé dans une portion d'extrémité (21a) de l'alésage (21) du boîtier (13) de façon que le joint soit en contact avec la surface externe de la partie de l'élément de distributeur interne (17) faisant saillie axialement hors de l'élément de distributeur externe (16), caractérisé en ce que le porte-joint (24) comporte une partie de rondelle (24b), s'étendant dans un plan perpendiculaire à l'axe commun (18) des éléments de distributeur (16, 17) et portant ledit joint (23), et une partie tubulaire cylindrique rigide (24a) coaxiale aux éléments de distributeur, insérée dans ladite portion (21a), de diamètre correspondant, de l'alésage (21) du boîtier et fixée à la cage extérieure (25a) d'un roulement (25) dont la cage intérieure (25b) est montée à la surface externe dudit élément de distributeur externe (16).

2. Dispositif selon la revendication 1, caractérisé en ce que l'une des faces axiales de la cage extérieure (25a) du roulement (25) est en appui contre un épaulement interne (26) de l'alésage (21) pour constituer une butée de positionnement des éléments de distributeur (16, 17) par rapport au boîtier (13).

3. Dispositif selon la revendication 2, caractérisé en ce que le porte-joint (24) est immobilisé dans ladite portion (21a) de l'alésage au moyen d'un circlips (27) engagé dans une gorge annulaire de ladite portion (21a) de l'alésage.

4. Dispositif selon l'une des revendications précédentes, caractérisé en ce qu'il comprend un joint d'étanchéité (28) inséré dans une gorge annulaire de ladite portion (21a) de l'alésage (21) et coopérant avec la surface externe de ladite partie cylindrique (42a) du porte-joint (24).

5. Dispositif selon l'une des revendications précédentes, caractérisé en ce que le joint (24) est surmoulé de part et d'autre de la partie de rondelle (24b) du porte-joint (24).

6. Dispositif selon l'une des revendications précédentes, caractérisé en ce que l'élément de distributeur externe (16) se prolonge par un pignon (20).

7. Dispositif selon la revendication 6, caractérisé en ce que le boîtier (13) est venu de matière avec un carter (14) abritant une crémaillère (15) de direction de véhicule automobile engrenant avec le pignon (20).

**Patentansprüche**

1. Vorrichtung, die ein Servolenkventil bildet, mit einem äußeren Verteilerelement (16) und einem inneren Verteileelement (17), die koaxial zueinander sind, wobei das innere Verteilerelement (17) in dem äußeren Verteilerelement (16) drehbar gelagert ist und einen aus dem äußeren Verteilerelement (16) axial vorstehenden Abschnitt aufweist, wobei das äußere Verteilerelement in einer Bohrung (21) eines ortsfesten Gehäuses (13) drehbar gelagert ist, und einem Axialdichtungssystem (22) mit einer Dichtung (23) und einem Dichtungsträger (24), der in einem Endabschnitt (21a) der Bohrung (21) des Gehäuses (13) derart sitzt, daß die Dichtung mit der Außenfläche des aus dem äußeren Verteilerelement (16) axial vorstehenden Abschnittes des inneren Verteilerelements (17) in Berührung steht, dadurch gekennzeichnet, daß der Dichtungsträger (24) einen scheibenförmigen Abschnitt (24b), der sich in einer zur gemeinsamen Achse (18) der Verteilerelemente (16, 17) senkrecht verlaufenden Ebene erstreckt und die Dichtung (23) trägt, sowie einen rohrförmigen zylindrischen starren Abschnitt (24a) aufweist, der koaxial zu den Verteilerelementen verläuft, in den besagten Endabschnitt (21a) der Bohrung (21) des Gehäuses mit entsprechendem Durchmesser eingesetzt und am Außenring (25a) eines Wälzlagers (25) befestigt ist, dessen Innenring (25b) an der Außenfläche des äußeren Verteilerelementes (16) angebracht ist.

2. Vorrichtung nach Anspruch 1, dadurch gekennzeichnet, daß eine der axialen Stirnseiten des Außenringes (25a) des Wälzlagers (25) an einer Innenschulter (26) der Bohrung (21) anliegt, um einen Positionierungsanschlag für die Verteilerelements (16, 17) bezüglich des Gehäuses (13) zu bilden.

3. Vorrichtung nach Anspruch 2, dadurch gekennzeichnet, daß der Dichtungsträger (24) in dem besagten Endabschnitt (21a) der Bohrung mittels eines Federringes (27) festgelegt ist, der in einer Ringnut des besagten Endabschnittes (21a) der Bohrung sitzt.

4. Vorrichtung nach einem der vorhergehenden Ansprüche, dadurch gekennzeichnet, daß sie einen Dichtring (28) aufweist, der in eine Ringnut des besagten Endabschnittes (21a) der Bohrung (21) eingesetzt ist und mit der Außenfläche des zylindrischen Abschnittes (24a) des Dichtungsträgers (24) zusammenwirkt.

5. Vorrichtung nach einem der vorhergehenden Ansprüche, dadurch gekennzeichnet, daß die Dichtung (23) beidseitig auf den scheibenförmigen Abschnitt (24b) des Dichtungsträgers (24) aufgegossen ist.

6. Vorrichtung nach einem der vorhergehenden Ansprüche, dadurch gekennzeichnet, daß das äußere Verteilerelement (16) durch ein Zahnrad (20) verlängert ist.

7. Vorrichtung nach Anspruch 6, dadurch gekennzeichnet, daß das Gehäuse (13) einstückig mit einem Gehäuse (14) ausgebildet ist, das eine mit dem Zahnrad (20) kämmende Kraftfahrzeug-Lenksäule (15) enthält.

**Claims**

1. Device forming a servo steering valve of the type comprising an external distributor element (16) and an internal distributor element (17) coaxial to each other, the internal distributor element (17) being rotatably mounted in the external distributor element (16) and comprising a portion axially projecting beyond the external distributor element (16), the external distributor element being rotatably mounted in a bore (21) of a fixed housing (13), and an axial sealing system (22) comprising a seal (23) and a seal support (24) engaged within an end portion (21a) of the bore (21) of the housing (13) such that the seal is in contact with the external surface of the portion of the internal distributor element (17) axially projecting beyond the external distributor element (16), characterized in that the seal support (24) comprises a disk-shaped portion (24b) extending in a plane perpendicular to the common axis (18) of the distributor elements (16, 17) and carrying said seal (23), and a rigid cylindrical tubular portion (24a) coaxial to the distributor elements, inserted in said portion (21a) of the housing bore (21) of corresponding diameter and fixed to the external race (25a) of a bearing (25), whose internal race (25b) is mounted on the outer surface of the external distributor element (16).

2. The device according to claim 1, characterized in that one of the axial faces of the external race (25a) of the bearing (25) is supported against an internal shoulder (26) of the bore (21) for constituting an abutment for positioning the distributor elements (16, 17) with respect to the housing (13).

3. The device according to claim 2, characterized in that the seal support (24) is immobilized in said portion (21a) of the bore by means of a circlip (27) engaged in an annular groove of said portion (21a) of the bore.

4. The device according to any of the preceding claims, characterized in that it comprises a sealing ring (28) inserted in an annular groove of said portion (21a) of the bore (21) and cooperating with the outer surface of said cylindrical portion (24a) of the seal support (24).

5. The device according to any of the preceding claims, characterized in that the seal (23) is molded on the disk-shaped portion (24b) of the seal support (24) from both sides thereof.

6. The device according to any of the preceding claims, characterized in that the external distributor element (16) is extended by a pinion (20).

7. The device according to claim 6, characterized in that the housing (13) is integral with a casing (14) including an automobile steering rack (15) in engagement with the pinion (20).